# EUROPEAN PATENT SPECIFICATION

(11) **EP 2 434 804 B1**
(45) Date of publication and mention of the grant of the patent: **28.03.2018**
(21) Application number: 10835496.0
(22) Date of filing: 09.12.2010
(51) Int. Cl.: H04W 72/12, H04W 28/16, H04W 92/20, H04B 7/024

(54) **METHOD AND BASE STATION IN COORDINATED SCHEDULING**
VERFAHREN UND BASISSTATION IN EINER KOORDINIERTEN RESSOURCENPLANUNG
PROCEDE ET STATION DE BASE DANS UNE PROGRAMMATION COORDONNEE

(30) Priority: 11.12.2009 CN 200910254329
(43) Date of publication of application: 28.03.2012
(73) Proprietor: ZTE Corporation, Shenzhen, Guangdong 518057 (CN)
(72) Inventor: TIAN, Kaibo, Guangdong 518057 (CN); LI, Feng, Guangdong 518057 (CN); ZHU, Changqing, Guangdong 518057 (CN); PENG, Aihua, Guangdong 518057 (CN)
(74) Representative: Manitz Finsterwald Patentanwälte PartmbB
(86) International application number: PCT/CN2010/079624
(87) International publication number: WO 2011/069461

(56) References cited:
- CN-A- 1 326 622
- CN-A- 101 282 566
- CN-A- 101 442 808
- CN-A- 101 461 268
- CN-A- 101 478 342
- US-A1- 2008 298 486
- MARVELL: "Downlink MIMO with Coordinated Beamforming and Scheduling", 3GPP DRAFT; R1-094906 CBF MARVELL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389270, [retrieved on 2009-11-04]
- MOTOROLA: "SCF-based COMP: Iterative Scheduler Algorithm and Performance Gain over Single-Point SU/MU Beamforming", 3GPP DRAFT; R1-093963 SCF BASED COBF AND RESULTS -FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388458, [retrieved on 2009-10-06]

## Description

### Technical Field

The invention relates to the user scheduling technique in the Long Term Evaluation-Advanced (LTE-A) system, and especially, to a method and a base station for scheduling a user in coordinated scheduling.

### Background of the Related Art

In order to improve the coverage rate of the high speed data rate service and cell average throughput, Coordinated Multiple Point (COMP) transmission and reception technique is introduced into the LTE-A system.

In the current LTE-A system, the COMP technique is mainly divided into two parts:
(1) joint transmission technique: each node in the coordinated transmission set can obtain data information, and at the same time, data are transmitted by multiple nodes or one node through the Physical Downlink Shared Channel (PDSCH);
(2) coordinated scheduling: only the serving cell can obtain data information to be transmitted, but user scheduling and beamforming confirmation are completed through negotiation in the coordinated set.

In related art, coordinated cell scheduling users includes the intra-cell initial scheduling and inter-cell iterative scheduling once or multiple times, and the user scheduling is completed after multiple user pairing search in the iterative scheduling at each time. How to quickly and effectively select a scheduled user in coordinated scheduling is a problem to be solved in the related art.

Related technologies are known from MARVELL: "Downlink MIMO with Coordinated Beamforming and Scheduling", 3GPP DRAFT; R1-094906 CBF MARVELL, 3GPP MOBILE COMPETENCE CENTRE; 650, ROUTE DES LUCIOLES; F-06921 SOPHIA-ANTIPOLIS CEDEX; FRANCE, no. Jeju; 9 November 2009 (2009-11-09), and MOTOROLA: "SCF-based COMP: Iterative Scheduler Algorithm and Performance Gain over Single-Point SU/MU Beamforming", 3GPP DRAFT; R1-093963 SCF BASED COBF AND RESULTS-FINAL, 3GPP MOBILE COMPETENCE CENTRE; 650, ROUTE DES LUCIOLES; F-06921 SOPHIA-ANTIPOLIS CEDEX; FRANCE, no. Miyazaki; 12 October 2009 (2009-10-12).

### Summary of the Invention

The technical problem to be solved by the present invention is to provide a method and a base station for scheduling a user in coordinated scheduling to reduce the computation amount in the iterative process and improve the system performance.

In order to solve the above problem, a method according to claim 1 and a base station according to claim 5 are provided. Further improvements and embodiments are provided in the dependent claims.

Also provided is a method for scheduling a user in coordinated scheduling, which is applied in a long term evaluation-advanced system, and the method comprises: a coordinated cell determining and storing user pairing information in initial scheduling; and when each subsequent iterative scheduling starts, the coordinated cell obtaining scheduled user information determined in scheduling at a last time by other coordinated cells except the coordinated cell, and determining a pre-scheduled user in the coordinated cell according to an interference condition of users in the coordinated cell to a scheduled user determined by the other coordinated cells in combination with the user pairing information of the coordinated cell that has been stored in the initial scheduling.

The above method can further be characterized in that:
the pre-scheduled users in the coordinated cell are one or multiple users in the users of the coordinated cell without interference to the scheduled user determined by the other coordinated cells except the coordinated cell, or, first M users in the users of the coordinated cell that are sequenced according to a sequence from small to large interference degrees of the users of the coordinated cell to the scheduled user determined by the other coordinated cells; a number of users of the coordinated cell is N, and M is an integer that is greater than or equal to 1 and less than or equal to N.

The above method can further be characterized in that:
after determining the pre-scheduled user, when determining one or multiple user pairs in the user pairing information that is stored are included in the pre-scheduled users, the coordinated cell computes system performance corresponding to scheduling the user pairs, and respectively computes system performance corresponding to scheduling each user in the pre-scheduled users, and takes a user or user pair with best system performance as the a scheduled user that is determined.

The above method can further be characterized in that:
when the interference degrees of users in the coordinated cell to the scheduled user determined by the other coordinated cells are all greater than an interference threshold value set by a system, the coordinated cell does not set the pre-scheduled user in iterative scheduling at this time, and further does not set a scheduled user in the iterative scheduling at this time.

The above method can further be characterized in that:
the coordinated cell implements multiple times of iterative scheduling, and a condition for the coordinated cell stopping iterative scheduling is that:
   the times of implementing iterative scheduling reaches times set by a system, or, the scheduled users who are determined in two consecutive times of iterative scheduling are same.

Also provided is a base station in coordinated scheduling, which is applied in a long term evaluation-advanced system, and the base station comprises: an initial scheduling processing module and an iterative scheduling processing module; wherein the initial scheduling processing module is configured to: determine user pairing information in a process of processing initial scheduling of a coordinated cell, and store the user pairing information; the iterative scheduling processing module is configured to: use the user pairing information that has been stored to determine a scheduled user in iterative scheduling of the coordinated cell.

The above base station can further be characterized in that:
the iterative scheduling processing module is further configured to: obtain scheduled user information determined in scheduling at a last time by other coordinated cells except the coordinated cell when each iterative scheduling starts, and determine a pre-scheduled user in the coordinated cell according to an interference condition of users in the coordinated cell user to a scheduled user determined by the other coordinated cells.

The above base station can further be characterized in that:
the pre-scheduled users in the coordinated cell are one or multiple users in the users of the coordinated cell without interference to the scheduled user determined by the other coordinated cells, or, the first M users in the users of the coordinated cell that are sequenced according to a sequence from small to large interference degrees of the users of the coordinated cell to the scheduled user determined by the other coordinated cells; a number of users of the coordinated cell is N, and M is an integer that is greater than or equal to 1 and less than or equal to N.

The above base station can further be characterized in that:
the iterative scheduling processing module is further configured to: compute system performance corresponding to scheduling a user pair after determining the pre-scheduled user and when judging one or multiple user pairs in the user pairing information that is stored are included in the pre-scheduled users, and respectively compute system performance corresponding to scheduling each user in the pre-scheduled users, and take a user or user pair with best system performance as the scheduled user that is determined.

The above base station can further be characterized in that:
the iterative scheduling processing module is further configured to: not set the pre-scheduled user in the iterative scheduling at this time and further not set the scheduled user the iterative scheduling at this time when the interference degrees of users in the coordinated cell to the scheduled user determined by the other coordinated cells are all greater than an interference threshold value set by a system.

The above base station can further be characterized in that:
the iterative scheduling processing module is further configured to: implement multiple times of iterative scheduling, wherein a condition for stopping iterative scheduling is that: the times of implementing iterative scheduling reaches times set by a system, or, the scheduled users who are determined in two consecutive times of iterative scheduling are same.

With the scheduling schemes in the present invention, in intra-cell scheduling, user pairing information is stored in an initial scheduling process and is used in subsequent iterative scheduling without performing multiple user pairing search in the iterative scheduling, which reduces the computation amount in the iterative scheduling and system resources occupied by the iterative scheduling and accelerates the system processing time in a premise of not reducing the system performance, thereby making the performance in the whole domain trend to the optimal.

### Brief Description of Drawings

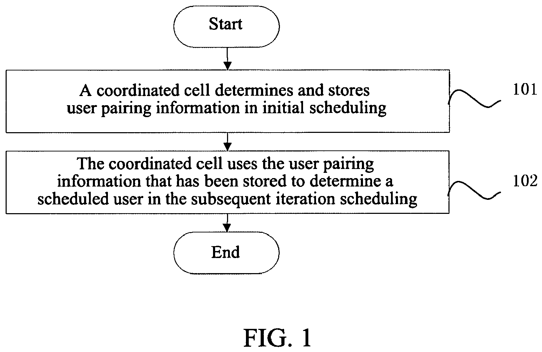

FIG. 1 is a flowchart of the method for scheduling a user in coordinated scheduling according to the example.

### Preferred Embodiments of the Present Invention

The present invention is applied in the Long Term Evaluation-Advanced (LTE-A) system, and applicable coordinated domain of the present invention generally includes a plurality of coordinated cells, each coordinated cell can support the antenna mode of the Single-User Multi-Input Multi-Output (SU-MIMO) and Multi-User Multi-Input Multi-Output (MU-MIMO), the user in each coordinated cell independently measures the channel quality from itself to the serving cell where the user is located, and feeds the measurement information back to the serving cell.

The base station in coordinated scheduling includes an initial scheduling processing module and an iterative scheduling processing module.

The initial scheduling processing module is used to determine and store user pairing information in the process of processing the initial scheduling of the coordinated cell.

The iterative scheduling processing module is used to use the user pairing information that has been stored to determine the scheduled user in the iterative scheduling of the coordinated cell.

When each of iterative scheduling starts, the iterative scheduling processing module obtains the scheduled user determined in the scheduling at the last time by other coordinated cells, determines a pre-scheduled user in the present coordinated cell according to the situation of interference of users in the present coordinated cell to the scheduled user determined by the other coordinated cells. The determined pre-scheduled users are one or multiple users in the users of the present coordinated cell without interference to the scheduled users determined by the other coordinated cells, or, the first M users in users of the present coordinated cell that are sequenced according to a sequence from small to large interference degrees of the users of the present coordinated cell to the scheduled user determined by the other coordinated cells; the number of users of the present coordinated cell is N, and M is an integer that is greater than or equal to 1 and less than or equal to N.

When determining that one or multiple user pairs in the stored user pairing information are included in the pre-scheduled users after determining the pre-scheduled users, the iterative scheduling processing module computes the system performances corresponding to scheduling the user pairs, also respectively computes the system performances corresponding to scheduling each user in the pre-scheduled users, and takes a user or user pair with the best system performance as the determined scheduled user.

The iterative scheduling processing module can implement multiple times of iterative scheduling, and the conditions for stopping the iterative scheduling are: the times of implementing the iterative scheduling reach the times set by the system, or, the determined scheduled users are the same in two consecutive times of iterative scheduling.

When the interference degrees of the users in the present coordinated cell to the scheduled user determined by the other coordinated cells are all greater than the interference threshold value set by the system, the iterative scheduling processing module does not set a pre-scheduled user in the iterative scheduling at this time, and either does not set a scheduled user in the iterative scheduling at this time.

As shown in FIG. 1, a method for scheduling a user in coordinated scheduling comprises following steps.

Step 101, a coordinated cell determines and stores user pairing information in initial scheduling;
an initial scheduling refers to each coordinated cell schedules the present cell at the first time without regard to the information of other cells. Specifically, the coordinated cell completes the initial scheduling of this cell without regard to the scheduling conditions of the other cells after receiving channel measurement information from user in this cell, multiple users can be scheduled in the condition that the channel state permits, all possible user pairing information is stored. User pairing refers that two orthogonal or quasi-orthogonal users (namely the user pair) determined according to channel information of users or two users who meet certain performance requirements can be used in pairs.

The pairing information mentioned in the present invention is pairing information which meets the performance requirements set by the system. The performance requirements set by the system can be the interference intensity (or called as the orthogonal degree) between two users.

Step 102, the coordinated cell uses the user pairing information that has been stored to determine a scheduled user in subsequent iterative scheduling.

The coordinated cell can implement multiple times of iterative scheduling, and each of iterative scheduling includes the following steps.
(a) The coordinated cell obtains the scheduled user determined by the other coordinated cells in the scheduling at the last time.
   The scheduling at the last time is the initial scheduling during the scheduling at the first time.
(b) The coordinated cell determines a pre-scheduled user of the present coordinated cell according to interference condition of users in the present coordinated cell to the scheduled user determined by the other coordinated cells.
   The pre-scheduled users of the present coordinated cell are one or multiple users in the present coordinated cell without interference to the scheduled users determined by the other coordinated cells, or, the first M users in users of the present coordinated cell that are sequenced according to a sequence from small to large interference degrees of the users of the present coordinated cell to the scheduled user determined by the other coordinated cells; the number of users of the present coordinated cell is N, and M is an integer that is greater than or equal to 1 and less than or equal to N.
   The system can also set an interference threshold value for determining the interference degree of users in the present coordinated cell to the users of other coordinated cells. When the interference degrees of users of the present coordinated cell to the scheduled user determined by the other coordinated cells are all greater than the interference threshold value set by the system, it denotes that the interference beyond the system acceptability to other cells will be formed no matter which user is scheduled in the present cell, and therefore, a pre-scheduled user is not set by the coordinated cell in the iterative scheduling at this time and further a scheduled user is either not set in the iterative scheduling at this time.
(c) when it is determined that one or multiple user pairs in the stored user pairing information are included in the pre-scheduled users after determining the pre-scheduled users, the coordinated cell computes the system performance corresponding to schedule the user pairs, also respectively computes the system performance corresponding to schedule each user in the pre-scheduled users, and takes a user or user pair with the best system performance as the determined scheduled user.

The coordinated cell can implement multiple times of iterative scheduling, and the conditions for stopping the iterative scheduling of the coordinated cell are: the times of implementing iterative scheduling reach the times set by the system, or, the determined scheduled users are the same in two consecutive times of iterative scheduling.

In the above method, in intra-cell scheduling, user pairing information is stored in an initial scheduling process, and is used in subsequent iterative scheduling without performing multiple user pairing search in iterative scheduling, which reduces the computation amount in the iterative scheduling and system resources occupied by the iterative scheduling and accelerates the system processing time in a premise of not reducing the system performance, thereby making the performance in the whole domain trend to the optimal.

The present invention can be implemented through a centralized way, a distributed way or a combination of the two ways. The centralized way refers that the information of users to be scheduled of all the coordinated cells are gathered into a central control point, and the central control point independently completes the iterative scheduling and finally transmits the scheduling results to the corresponding coordinated cells; the distributed way refers that each coordinated cell obtains the pre-scheduling information of other coordinated cells alone, completes the pre-scheduling of the present cell independently, and sends the pre-scheduling information of the present cell to the other coordinated cells; a combination of the two ways can be called as a relay way.

A specific example of the present invention applied in a relay coordinated network is provided in the following. In this specific example, a condition of ending the iterative scheduling is that the determined scheduled users are the same in two consecutive times of iterative scheduling (i.e. reaching a convergence).

It is assumed that there are 3 coordinated cells in the domain, and they are coordinated cell A, coordinated cell B and coordinated cell C respectively. Each coordinated cell can support modes of MU-MIMO and SU-MIMO, and there are 3 users to be scheduled in the coordinated resources of each coordinated cell.

Users to be scheduled in the coordinated cell A are respectively called: user a1, user a2, user a3.

Users to be scheduled in the coordinated cell B are respectively called: user b1, user b2, user b3.

Users to be scheduled in the coordinated cell C are respectively called: user c1, user c2, user c3.

It is assumed that strong interference will be formed between user a2 and user c2 and on the first stream of user a2 and user b3 and on the second stream of user c3 and user b3. It is also assumed that coordinated cell C with the smallest traffic is selected as a relay cell.

### Initial pre-scheduling

3 coordinated cells independently implement the scheduling of the present cell without regard to other coordinated cells.

Coordinated cell A completes initial pre-scheduling of the present cell with a comprehensive consideration of fairness and current channel states of each user to be scheduled, and determines that a2 is the initial scheduled user and users a1 and a3 can be paired.

Coordinated cell B completes initial pre-scheduling of the present cell with a comprehensive consideration of fairness and current channel states of each user to be scheduled, and determines that b3 is the initial scheduled user and user b3 can simultaneously transmit 2 streams and users to be scheduled in the present cell do not have a matched user to be paired; the scheduling is called as the mode of SU-MIMO.

Coordinated cell C completes initial pre-scheduling of the present cell with a comprehensive consideration of fairness and current channel states of each user to be scheduled, and determines that c2 and c3 are the initial scheduled users; the scheduling is the mode of MU-MIMO.

When the initial pre-scheduling of 3 coordinated cells is completed, the scheduling results and information related to scheduled users are respectively transmitted to a relay cell; the relay cell gathers the scheduling information of other cells and transmits all the scheduling information to all the coordinated cells; each coordinated cell receives all the latest scheduling information transmitted from the relay cell and recomputes the scheduling schemes of the present cell.

### The first iterative pre-scheduling

In addition to the consideration of fairness and current channel states of each user to be scheduled, coordinated cell A should also consider the scheduling of coordinated cell B (scheduling user b3 and using 2 streams) and the scheduling of coordinated cell C (simultaneously scheduling user c2 and user c3), that is, when meeting certain performance of the present cell, the performance loss induced to the other coordinated cells should also be taken into consideration, and the initial scheduling of the present cell is further completed.

In the scheduling process, the scheduled possibility of the 3 users in the present cell is recomputed in a case of assuming that b3, c2, and c3 have been scheduled. The first stream of user a2 and user b3 has strong interference, and user a2 has interference with user c2, so the scheduling priority of a2 is the lowest. Users without interference to the scheduled user determined by the other coordinated cells are a3 and a1, and the pre-scheduled users in the first iterative scheduling are a3 and a1. The coordinated cell A determines that a3 and a1 in the stored pairing information of the initial scheduling can be paired, computes the corresponding system performance when simultaneously scheduling a3 and a1, and computes the corresponding system performance when independently scheduling a3 or a1. When the performance of simultaneously scheduling a3 and a1 is better than that of independently scheduling a3 or a1, a3 and a1 are determined as the scheduled users.

In other specific examples, in addition to determining the users in the present coordinated cell without interference to the scheduled user determined by the other coordinated cells as the pre-scheduled users as mentioned above, the pre-scheduled users also can be the first M users in users of the present coordinated cell that are sequenced according to a sequence from small to large interference degrees of the users of the present coordinated cell to the scheduled user determined by the other coordinated cells; the number of users of the present coordinated cell is N, and M is an integer that is greater than or equal to 1 and less than or equal to N. For example, the sequence is a3, a1, a2, and the first two users are determined as the pre-scheduled users.

After determining multiple pre-scheduled users, the sequence of scheduling priorities thereof can also be determined according to the current channel states of each user.

In addition to the consideration of fairness and the current channel states of each user to be scheduled, coordinated cell B should also consider the scheduling of coordinated cell A (user a2) and the scheduling of coordinated cell C (simultaneously scheduling user c2 and user c3), that is, when meeting certain performance of the present cell, the performance loss induced to the other coordinated cells should also be taken into consideration, and the initial scheduling of the present cell is further completed.

In the scheduling process, the scheduled possibility of the 3 users in the present cell is recomputed in a case of assuming that a2, c2, and c3 have been scheduled. The first stream of user a2 and user b3 has strong interference, and the second stream of user c3 and user b3 has strong interference, so the scheduling priority of b3 is the lowest. Users without interference to the scheduled users determined by the other coordinated cells are b1 and b2, and the pre-scheduled users in the first iterative scheduling are b1 and b2. The pairing information stored in the initial scheduling is searched, there is no other pairing information except that b3 can use 2 streams, and therefore b2 is determined as the scheduled user.

In addition to the consideration of fairness and the current channel states of each user to be scheduled, coordinated cell C should also consider the scheduling of coordinated cell A (user a2) and the scheduling of coordinated cell B (scheduling user b3 and using 2 streams), that is, when meeting certain performance of the present cell, the performance loss induced to the other coordinated cells should also be taken into consideration, and the initial scheduling of the present cell is further completed.

In the scheduling process, the scheduled possibility of the 3 users in the present cell is recomputed in a case of assuming that a2 and b3 have been scheduled. The second stream of user c3 and user b3 has strong interference, and there is strong interference between user a2 and user c2, so the scheduling priorities of c3 and c2 are the lowest. The pairing information stored in the initial scheduling is searched, c3 and c2 can be paired, and the performance of simultaneously scheduling the two users is recomputed. Based on computation, the performance of simultaneously scheduling the two users is still worse than the performance of independently scheduling c1, so the pre-scheduling result at this time is c1.

When the first iterative pre-scheduling of 3 coordinated cells is completed, the scheduling results and information related to scheduled users are respectively transmitted to a relay cell; the relay cell first judges whether the scheduling result at this time is completely consistent with the scheduling result at the last time after gathering the scheduling information of other cells, if the scheduling result at this time is not completely consistent with the scheduling result at the last time, that is, a convergence state is not reached, then the relay cell transmits all the scheduling information at this time to all the coordinated cells again; each coordinated cell receives all the latest scheduling information transmitted from the relay cell and recomputes the scheduling schemes of the present cell.

### The second iterative pre-scheduling

In addition to the consideration of fairness and current channel states of each user to be scheduled, coordinated cell A also considers the pre-scheduled user b2 of coordinated cell B and pre-scheduled user c1 of coordinated cell C, and further completes initial scheduling of the present cell. In the scheduling process, the scheduled possibility of the 3 users in the present cell is recomputed in a case of assuming that b2 and c1 have been scheduled, and the possibility from the large to the small of single user who is scheduled is in an order of: a3, a1, a2; the pairing information stored in the initial scheduling is searched, a3 and a1 can be paired, the performance of simultaneously scheduling the paired users is computed, and the performance of simultaneously scheduling the paired users is better than the performance of independently scheduling a3, so the pre-scheduling result at this time is user a1 and user a3, which is consistent with the scheduling result at the last time.

In addition to the consideration of fairness and current channel states of each user to be scheduled, coordinated cell B should also consider the pre-scheduled users a1 and a3 of coordinated cell A and the pre-scheduled user c1 of coordinated cell C, and further completes the initial scheduling of the present cell. In the scheduling process, the scheduled possibility of the 3 users in the present cell is recomputed in a case of assuming that a1, a3 and c1 have been scheduled, and the possibility from the large to the small of single user who is scheduled is in an order of: b2, b3, b1; the pairing information stored in the initial scheduling is searched, and b3 can use 2 streams. Based on computation, the performance of simultaneously scheduling the 2 streams of b3 is worse than the performance of independently scheduling b2, so the pre-scheduling result at this time is b2, which is consistent with the scheduling result at the last time.

In addition to the consideration of fairness and current channel states of each user to be scheduled, coordinated cell C should also consider the pre-scheduled user a1 and user a3 of coordinated cell A and pre-scheduled user b2 of coordinated cell B, and further completes initial scheduling of the present cell. In the scheduling process, the scheduled possibility of the 3 users in the present cell is recomputed in a case of assuming that a1, a3 and b2 have been scheduled, and the possibility from the large to the small of single user who is scheduled is in an order of: c1, c3, c2; the pairing information stored in the initial scheduling is searched, c3 and c2 can be paired, and the performance of simultaneously scheduling the two users is recomputed. Based on computation, the performance of simultaneously scheduling the two users is better than the performance of independently scheduling c1, so the pre-scheduling result at this time is user c2 and user c3.

When the second iterative pre-scheduling of 3 coordinated cells is completed, the scheduling results and information related to scheduled users are respectively transmitted to a relay cell; the relay cell first judges whether the scheduling result at this time is completely consistent with the scheduling result at the last time after gathering the scheduling information of other cells, if the scheduling result at this time is not completely consistent with the scheduling result at the last time, that is, a convergence state is not reached, then the relay cell transmits all the scheduling information at this time to all the coordinated cells again; each coordinated cell receives all the latest scheduling information transmitted from the relay cell and recomputes the scheduling schemes of the present cell.

### The third iterative pre-scheduling

In addition to the consideration of fairness and current channel states of each user to be scheduled, coordinated cell A also considers the pre-scheduled user b2 of coordinated cell B and pre-scheduled user c2 and c3 of coordinated cell C, and further completes initial scheduling of the present cell. In the scheduling process, the scheduled possibility of the 3 users in the present cell is recomputed in a case of assuming that b2, c2 and c3 have been scheduled, and the possibility from the large to the small of single user who is scheduled is in an order of: a3, a1, a2; the pairing information stored in the initial scheduling is searched, a3 and a1 can be paired, the performance of simultaneously scheduling the paired users is computed, and the performance of simultaneously scheduling the paired users is better than the performance of independently scheduling a3, so the pre-scheduling result at this time is user a1 and user a3, which is consistent with the scheduling result at the last time.

In addition to the consideration of fairness and current channel states of each user to be scheduled, coordinated cell B should also consider the pre-scheduled users a1 and a3 of coordinated cell A and the pre-scheduled users c2 and c3 of coordinated cell C, and further completes the initial scheduling of the present cell. In the scheduling process, the scheduled possibility of the 3 users in the present cell is recomputed in a case of assuming that a1, a3, c1 and c3 have been scheduled, and the possibility from the large to the small of single user who is scheduled is in an order of: b2, b1, b3; the pairing information stored in the initial scheduling is searched, and b3 can use 2 streams. Based on computation, the performance of simultaneously scheduling the 2 streams of b3 is worse than the performance of independently scheduling b2, so the pre-scheduling result at this time is b2, which is consistent with the scheduling result at the last time.

In addition to the consideration of fairness and the current channel states of each user to be scheduled, coordinated cell C should also consider the pre-scheduled user a1 and user a3 of coordinated cell A and pre-scheduled user b2 of coordinated cell B, and further completes initial scheduling of the present cell. In the scheduling process, as the pre-scheduling results at the last time of coordinated cell A and coordinated cell B are unchanged, so the pre-scheduling result at this time is still the pre-scheduling result at the last time, that is, scheduled users c2 and c3.

When the third iterative pre-scheduling of 3 coordinated cells is completed, the scheduling results and information related to scheduled users are respectively transmitted to a relay cell; the relay cell first judges whether the scheduling result at this time is completely consistent with the scheduling result at the last time after gathering the scheduling information of other cells, if the scheduling result at this time is completely consistent with the scheduling result at the last time, that is, a convergence state is reached, then the relay cell notifies all the coordinated cells of the scheduling reaching the optimal state, and the scheduling ends; each coordinated cell receives the scheduling completion information transmitted from the relay cell and implements a corresponding scheduling according to the final iterative result.

When coordinated cells and users to be scheduled increase, final convergence acting as a condition of completing the iteration may need very large times of iterations, or may be unable to obtain a final convergence state, and therefore a condition of determining that the iteration ends can also be the limitation of the times of iterations or the whole domain meeting a certain performance threshold.

The above description is just the preferred examples of the present invention, which is not used to limit the present invention. The present invention can have various modifications and changes for those skilled in the art. Any modifications, equivalent substitutions, and improvements, etc. made within the scope of the appended claims shall all fall into the protection scope of the present invention.

### Industrial Applicability

With the scheduling schemes in the present invention, in intra-cell scheduling, user pairing information is stored in an initial scheduling process and is used in subsequent iterative scheduling without performing multiple user pairing search in the iterative scheduling, which reduces the computation amount in the iterative scheduling and system resources occupied by the iterative scheduling and accelerates the system processing time in a premise of not reducing the system performance, thereby making the performance in the whole domain trend to the optimal.

## Claims

1. A method for scheduling users in coordinated scheduling, which is applied in a long term evaluation-advanced system, and the method comprising:
a coordinated cell determining and storing user pairing information in initial scheduling (101), an initial scheduling referring to that each coordinated cell schedules the present cell at the first time without regard to the information of other cells, user pairing referring to two orthogonal or quasi-orthogonal users determined according to channel information of users or two users who meet certain performance requirements used in pairs; and
when each subsequent iterative scheduling starts, the coordinated cell obtaining scheduled user information determined in scheduling at a last time by other coordinated cells except the coordinated cell, and determining a pre-scheduled user in the coordinated cell according to an interference condition of users in the coordinated cell to a scheduled user determined by the other coordinated cells in combination with the user pairing information of the coordinated cell that has been stored in the initial scheduling, wherein
the pre-scheduled users in the coordinated cell are one or multiple users in the users of the coordinated cell without interference to the scheduled user determined by the other coordinated cells except the coordinated cell, or, first M users in the users of the coordinated cell that are sequenced according to a sequence from small to large interference degrees of the users of the coordinated cell to the scheduled user determined by the other coordinated cells; a number of users of the coordinated cell is N, and M is an integer that is greater than or equal to 1 and less than or equal to N.

2. The method according to claim 1 further comprising:
after determining the pre-scheduled user, when determining one or multiple user pairs in the user pairing information that has been stored are included in the pre-scheduled users, the coordinated cell computing system performance corresponding to scheduling of the user pairs, and respectively computing system performance corresponding to scheduling of each user in the pre-scheduled users, and taking a user or user pair with best system performance as the a scheduled user that is determined (102).

3. The method according to claim 1 further comprising:
when the interference degrees of users in the coordinated cell to the scheduled user determined by the other coordinated cells are all greater than an interference threshold value set by a system, the coordinated cell not setting the pre-scheduled user in iterative scheduling at this time, and further not setting a scheduled user in the iterative scheduling at this time.

4. The method according to claim 2, wherein
the coordinated cell implements multiple times of iterative scheduling, and a condition for the coordinated cell stopping iterative scheduling is that:
the times of implementing iterative scheduling reaches times set by a system, or, the scheduled users who are determined in two consecutive times of iterative scheduling are same.

5. A base station for scheduling users in coordinated scheduling, which is applied in a long term evaluation-advanced system, and the base station comprising: an initial scheduling processing module and an iterative scheduling processing module; wherein
the initial scheduling processing module is configured to: determine user pairing information in a process of processing initial scheduling of a coordinated cell, and store the user pairing information, an initial scheduling referring to that each coordinated cell schedules the present cell at the first time without regard to the information of other cells, user pairing referring to two orthogonal or quasi-orthogonal users determined according to channel information of users or two users who meet certain performance requirements used in pairs;
the iterative scheduling processing module is configured to: use the user pairing information that has been stored to determine a scheduled user in iterative scheduling of the coordinated cell, obtain scheduled user information determined in scheduling at a last time by other coordinated cells except the coordinated cell when each iterative scheduling starts, and determine a pre-scheduled user in the coordinated cell according to an interference condition of users in the coordinated cell user to a scheduled user determined by the other coordinated cells, wherein
the pre-scheduled users in the coordinated cell are one or multiple users in the users of the coordinated cell without interference to the scheduled user determined by the other coordinated cells, or, the first M users in the users of the coordinated cell that are sequenced according to a sequence from small to large interference degrees of the users of the coordinated cell to the scheduled user determined by the other coordinated cells; a number of users of the coordinated cell is N, and M is an integer that is greater than or equal to 1 and less than or equal to N.

6. The base station according to claim 5, wherein
the iterative scheduling processing module is further configured to: compute system performance corresponding to scheduling of a user pair after determining the pre-scheduled user and when judging one or multiple user pairs in the user pairing information that has been stored are included in the pre-scheduled users, and respectively compute system performance corresponding to scheduling of each user in the pre-scheduled users, and take a user or user pair with best system performance as the scheduled user that is determined.

7. The base station according to claim 5, wherein
the iterative scheduling processing module is further configured to: not set the pre-scheduled user in the iterative scheduling at this time and further not set the scheduled user the iterative scheduling at this time when the interference degrees of users in the coordinated cell to the scheduled user determined by the other coordinated cells are all greater than an interference threshold value set by a system.

8. The base station according to claim 6, wherein
the iterative scheduling processing module is further configured to: implement multiple times of iterative scheduling, wherein a condition for stopping iterative scheduling is that: the times of implementing iterative scheduling reaches times set by a system, or, the scheduled users who are determined in two consecutive times of iterative scheduling are same.

## Patentansprüche

1. Verfahren zum Einplanen von Nutzern in einer koordinierten Terminplanung, das in einem fortgeschrittenen Long Term Evaluation System angewendet wird, und wobei das Verfahren umfasst, dass:
eine koordinierte Zelle Nutzerpaarungsinformationen in einer anfänglichen Terminplanung bestimmt und speichert (101), wobei "anfängliche Terminplanung" bezeichnet, dass jede koordinierte Zelle die gegenwärtige Zelle bei dem ersten Zeitpunkt ohne Berücksichtigung der Informationen von anderen Zellen einplant, und "Nutzerpaarung" zwei orthogonale oder quasi orthogonale Nutzer, die in Übereinstimmung mit Kanalinformationen von Nutzern bestimmt werden, oder zwei Nutzer bezeichnet, die bestimmte Leistungsanforderungen, die in Paaren genutzt werden, erfüllen; und
wenn jede nachfolgende iterative Terminplanung startet, die koordinierte Zelle Informationen über eingeplante Nutzer erhält, die bei der Terminplanung bei einem letzten Zeitpunkt durch andere koordinierte Zellen außer der koordinierten Zelle bestimmt wurden, und ein vorab eingeplanter Nutzer in der koordinierten Zelle in Übereinstimmung mit einer Interferenzbedingung von Nutzern in der koordinierten Zelle zu einem eingeplanten Nutzer bestimmt wird, der von den anderen koordinierten Zellen in Kombination mit den Nutzerpaarungsinformationen der koordinierten Zelle bestimmt wurde, die in der anfänglichen Terminplanung gespeichert worden sind, wobei
die vorab eingeplanten Nutzer in der koordinierten Zelle ein oder mehrere Nutzer von den Nutzern der koordinierten Zelle ohne Interferenz mit dem eingeplanten Nutzer sind, der von den anderen koordinierten Zellen außer der koordinierten Zelle bestimmt wurde, oder M erste Nutzer von den Nutzern der koordinierten Zelle, die in Übereinstimmung mit einer Reihenfolge von kleinen zu großen Interferenzgraden der Nutzer der koordinierten Zelle zu dem eingeplanten Nutzer geordnet sind, der von den anderen koordinierten Zellen bestimmt wurde; wobei eine Anzahl der Nutzer der koordinierten Zelle N ist und M eine ganze Zahl ist, die größer oder gleich 1 und kleiner oder gleich N ist.

2. Verfahren nach Anspruch 1, das ferner umfasst, dass:
wenn nach dem Bestimmen des vorab eingeplanten Nutzers festgestellt wird, dass ein oder mehrer Nutzerpaare in den Nutzerpaarungsinformationen, die gespeichert worden sind, in den vorab eingeplanten Nutzern enthalten sind, die koordinierte Zelle die Systemleistung berechnet, die der Terminplanung der Nutzerpaare entspricht, und jeweils die Systemleistung berechnet wird, die dem Einplanen jedes Nutzers von den vorab eingeplanten Nutzern entspricht, und ein Nutzer oder ein Nutzerpaar mit der besten Systemleistung als der eingeplante Nutzer verwendet wird, der bestimmt wurde (102).

3. Verfahren nach Anspruch 1, das ferner umfasst, dass:
wenn die Interferenzgrade von Nutzern in der koordinierten Zelle zu dem eingeplanten Nutzer, der von den anderen koordinierten Zellen bestimmt wurde, alle größer als ein Interferenz-Schwellenwert sind, der von einem System festgelegt wird, die koordinierte Zelle zu diesem Zeitpunkt den vorab eingeplanten Nutzer bei einer iterativen Terminplanung nicht festlegt, und ferner keinen eingeplanten Nutzer in der iterativen Terminplanung zu diesem Zeitpunkt festlegt.

4. Verfahren nach Anspruch 2, wobei
die koordinierte Zelle mehrere Durchläufe einer iterativen Terminplanung implementiert, und eine Bedingung dafür, dass die koordinierte Zelle die iterative Terminplanung stoppt, darin besteht, dass:
die Anzahl der Implementierungen der iterativen Terminplanung eine Anzahl erreicht, die von einem System festgelegt wird, oder die eingeplanten Nutzer, die in zwei aufeinanderfolgenden Durchläufen der iterativen Terminplanung bestimmt wurden, gleich sind.

5. Basisstation zum Einplanen von Nutzern in einer koordinierten Terminplanung, die in einem fortgeschrittenen Long Term Evaluation System angewendet wird, und wobei die Basisstation umfasst: ein Modul zur Verarbeitung einer anfänglichen Terminplanung und ein Modul zur Verarbeitung einer iterativen Terminplanung; wobei
das Modul zur Verarbeitung einer anfänglichen Terminplanung ausgestaltet ist, um: Nutzerpaarungsinformationen in einem Prozess des Verarbeitens einer anfänglichen Terminplanung einer koordinierten Zelle zu bestimmen und die Nutzerpaarungsinformationen zu speichern, wobei "anfängliche Terminplanung" bezeichnet, dass jede koordinierte Zelle die gegenwärtige Zelle bei dem ersten Zeitpunkt ohne Berücksichtigung der Informationen von anderen Zellen einplant, und "Nutzerpaarung" zwei orthogonale oder quasi orthogonale Nutzer, die in Übereinstimmung mit Kanalinformationen von Nutzern bestimmt werden, oder zwei Nutzer bezeichnet, die bestimmte Verhaltungsanforderungen erfüllen, die in Paaren genutzt werden;
das Modul zur Verarbeitung einer iterativen Terminplanung ausgestaltet ist, um: die Nutzerpaarungsinformationen zu verwenden, die gespeichert worden sind, um einen eingeplanten Nutzer in einer iterativen Terminplanung der koordinierten Zelle zu bestimmen, um Informationen zu einem eingeplanten Nutzer zu erhalten, der beim Einplanen bei einem letzten Zeitpunkt durch andere koordinierte Zellen außer der koordinierten Zelle bestimmt wurde, wenn jede iterative Terminplanung startet, und um einen vorab eingeplanten Nutzer in der koordinierten Zelle in Übereinstimmung mit einer Interferenzbedingung von Nutzern in der koordinierten Zelle zu einem eingeplanten Nutzer, der von den anderen koordinierten Zellen bestimmt wurde, zu bestimmen, wobei
die vorab eingeplanten Nutzer in der koordinierten Zelle ein oder mehrere Nutzer von den Nutzern der koordinierten Zelle ohne Interferenz zu dem eingeplanten Nutzer sind, der von den anderen koordinierten Zellen bestimmt wurde, oder die ersten M Nutzer von den Nutzern der koordinierten Zelle, die in Übereinstimmung mit einer Reihenfolge von kleinen zu großen Interferenzgraden der Nutzer der koordinierten Zelle zu dem eingeplanten Nutzer geordnet sind, der von den anderen koordinierten Zellen bestimmt wurde; wobei eine Anzahl von Nutzern der koordinierten Zelle N ist und M eine ganze Zahl ist, die größer oder gleich 1 und kleiner oder gleich N ist.

6. Basisstation nach Anspruch 5, wobei
das Modul zur Verarbeitung einer iterativen Terminplanung ferner ausgestaltet ist, um: eine Systemleistung zu berechnen, die der Terminplanung eines Nutzerpaars entspricht, nachdem der vorab eingeplante Nutzer bestimmt wurde und wenn festgestellt wird, dass ein oder mehrere Nutzerpaare in den Nutzerpaarungsinformationen, die gespeichert worden sind, in den vorab eingeplanten Nutzern enthalten sind, und um jeweils eine Systemleistung zu berechnen, die der Terminplanung jedes Nutzers in den vorab eingeplanten Nutzern entspricht, und um einen Nutzer oder ein Nutzerpaar mit der besten Systemleistung als den geplanten Nutzer zu verwenden, der bestimmt wurde.

7. Basisstation nach Anspruch 5, wobei
das Modul zur Verarbeitung einer iterativen Terminplanung ferner ausgestaltet ist, um: den vorab eingeplanten Nutzer in der iterativen Terminplanung zu diesem Zeitpunkt nicht festzulegen und ferner den eingeplanten Nutzer bei der iterativen Terminplanung zu diesem Zeitpunkt nicht festzulegen, wenn die Interferenzgrade von Nutzern in der koordinierten Zelle zu dem eingeplanten Nutzer, der von den anderen koordinierten Zellen bestimmt wurde, alle größer als ein Interferenz-Schwellenwert sind, der von einem System eingestellt wurde.

8. Basisstation nach Anspruch 6, wobei
das Modul zur Verarbeitung einer iterativen Terminplanung ferner ausgestaltet ist, um: mehrere Durchläufe einer iterativen Terminplanung zu implementieren, wobei eine Bedingung zum Stoppen der iterativen Terminplanung darin besteht, dass: die Anzahl der Implementierungen einer iterativen Terminplanung eine Anzahl erreicht, die von einem System festgelegt wird, oder die eingeplanten Nutzer, die in zwei aufeinanderfolgenden Durchläufen der iterativen Terminplanung bestimmt werden, gleich sind.

## Revendications

1. Procédé pour ordonnancer des utilisateurs dans un ordonnancement coordonné, qui est appliqué dans un système à évaluation avancée à long terme, et le procédé comprenant :
une cellule coordonnée déterminant et stockant des informations d'appariement d'utilisateurs dans un ordonnancement initial (101), un ordonnancement initial faisant référence au fait que chaque cellule coordonnée ordonnance la cellule présente au premier temps sans tenir compte des informations d'autres cellules, l'appariement d'utilisateurs faisant référence à deux utilisateurs orthogonaux ou quasi-orthogonaux déterminés en fonction d'informations de canal d'utilisateurs ou à deux utilisateurs qui satisfont à certaines exigences de performance utilisés par paires ; et
lorsque chaque ordonnancement itératif subséquent commence, la cellule coordonnée obtenant des informations d'utilisateur ordonnancé déterminées dans un ordonnancement à un dernier temps par d'autres cellules coordonnées à l'exception de la cellule coordonnée, et déterminant un utilisateur pré-ordonnancé dans la cellule coordonnée en fonction d'une condition d'interférence d'utilisateurs dans la cellule coordonnée avec un utilisateur ordonnancé déterminé par les autres cellules coordonnées en combinaison avec les informations d'appariement d'utilisateurs de la cellule coordonnée qui ont été stockées dans l'ordonnancement initial, où
les utilisateurs pré-ordonnancés dans la cellule coordonnée sont un ou de multiples utilisateurs parmi les utilisateurs de la cellule coordonnée sans interférence avec l'utilisateur ordonnancé déterminé par les autres cellules coordonnées à l'exception de la cellule coordonnée, ou, M premiers utilisateurs parmi les utilisateurs de la cellule coordonnée qui sont séquencés selon une séquence allant de petits à grands degrés d'interférence des utilisateurs de la cellule coordonnée avec l'utilisateur ordonnancé déterminé par les autres cellules coordonnées ; un nombre d'utilisateurs de la cellule coordonnée est N, et M est un entier qui est supérieur ou égal à 1 et inférieur ou égal à N.

2. Procédé selon la revendication 1, comprenant en outre :
après la détermination de l'utilisateur pré-ordonnancé, lors de la détermination qu'une ou de multiples paires d'utilisateurs dans les informations d'appariement d'utilisateurs qui ont été stockées sont incluses parmi les utilisateurs pré-ordonnancés, la cellule coordonnée calculant une performance système correspondant à l'ordonnancement des paires d'utilisateurs, et calculant respectivement une performance système correspondant à l'ordonnancement de chaque utilisateur parmi les utilisateurs pré-ordonnancés, et prenant un utilisateur ou une paire d'utilisateurs avec la meilleure performance système comme l'utilisateur ordonnancé qui est déterminé (102).

3. Procédé selon la revendication 1, comprenant en outre :
lorsque les degrés d'interférence d'utilisateurs dans la cellule coordonnée avec l'utilisateur ordonnancé déterminé par les autres cellules coordonnées sont tous supérieurs à une valeur de seuil d'interférence établie par un système, la cellule coordonnée n'établissant pas l'utilisateur pré-ordonnancé dans un ordonnancement itératif à ce temps, et en outre n'établissant pas un utilisateur ordonnancé dans l'ordonnancement itératif à ce temps.

4. Procédé selon la revendication 2, dans lequel
la cellule coordonnée met en oeuvre de multiples temps d'ordonnancement itératif, et une condition pour que la cellule coordonnée arrête un ordonnancement itératif est que :
les temps de mise en oeuvre d'ordonnancement itératif atteignent des temps établis par un système, ou, les utilisateurs ordonnancés qui sont déterminés dans deux temps consécutifs d'ordonnancement itératif sont les mêmes.

5. Station de base pour ordonnancer des utilisateurs dans un ordonnancement coordonné, qui est appliqué dans un système à évaluation avancée à long terme, et la station de base comprenant : un module de traitement d'ordonnancement initial et un module de traitement d'ordonnancement itératif ; dans laquelle
le module de traitement d'ordonnancement initial est configuré pour : déterminer des informations d'appariement d'utilisateurs dans un processus de traitement d'ordonnancement initial d'une cellule coordonnée, et stocker les informations d'appariement d'utilisateurs, un ordonnancement initial faisant référence au fait que chaque cellule coordonnée ordonnance la cellule présente au premier temps sans tenir compte des informations d'autres cellules, l'appariement d'utilisateurs faisant référence à deux utilisateurs orthogonaux ou quasi-orthogonaux déterminés en fonction d'informations de canal d'utilisateurs ou à deux utilisateurs qui satisfont à certaines exigences de performance utilisés par paires ;
le module de traitement d'ordonnancement itératif est configuré pour : utiliser les informations d'appariement d'utilisateurs qui ont été stockées pour déterminer un utilisateur ordonnancé dans un ordonnancement itératif de la cellule coordonnée, obtenir des informations d'utilisateur ordonnancé déterminées dans un ordonnancement à un dernier temps par d'autres cellules coordonnées à l'exception de la cellule coordonnée lorsque chaque ordonnancement itératif commence, et déterminer un utilisateur pré-ordonnancé dans la cellule coordonnée en fonction d'une condition d'interférence d'utilisateurs dans la cellule coordonnée avec un utilisateur ordonnancé déterminé par les autres cellules coordonnées, où
les utilisateurs pré-ordonnancés dans la cellule coordonnée sont un ou de multiples utilisateurs parmi les utilisateurs de la cellule coordonnée sans interférence avec l'utilisateur ordonnancé déterminé par les autres cellules coordonnées, ou, les M premiers utilisateurs parmi les utilisateurs de la cellule coordonnée qui sont séquencés selon une séquence allant de petits à grands degrés d'interférence des utilisateurs de la cellule coordonnée avec l'utilisateur ordonnancé déterminé par les autres cellules coordonnées ; un nombre d'utilisateurs de la cellule coordonnée est N, et M est un entier qui est supérieur ou égal à 1 et inférieur ou égal à N.

6. Station de base selon la revendication 5, dans laquelle
le module de traitement d'ordonnancement itératif est en outre configuré pour : calculer une performance système correspondant à l'ordonnancement d'une paire d'utilisateurs après la détermination de l'utilisateur pré-ordonnancé et lors du jugement qu'une ou de multiples paires d'utilisateurs dans les informations d'appariement d'utilisateurs qui ont été stockées sont incluses parmi les utilisateurs pré-ordonnancés, et calculer respectivement une performance système correspondant à l'ordonnancement de chaque utilisateur parmi les utilisateurs pré-ordonnancés, et prendre un utilisateur ou une paire d'utilisateurs avec la meilleure performance système en comme l'utilisateur ordonnancé qui est déterminé.

7. Station de base selon la revendication 5, dans laquelle
le module de traitement d'ordonnancement itératif est en outre configuré pour : ne pas établir l'utilisateur pré-ordonnancé dans l'ordonnancement itératif à ce temps et en outre ne pas établir l'utilisateur ordonnancé dans l'ordonnancement itératif à ce temps lorsque les degrés d'interférence d'utilisateurs dans la cellule coordonnée avec l'utilisateur ordonnancé déterminé par les autres cellules coordonnées sont tous supérieurs à une valeur de seuil d'interférence établie par un système.

8. Station de base selon la revendication 6, dans laquelle
le module de traitement d'ordonnancement itératif est en outre configuré pour : mettre en oeuvre de multiples temps d'ordonnancement itératif, où une condition pour arrêter un ordonnancement itératif est que : les temps de mise en oeuvre d'ordonnancement itératif atteignent des temps établis par un système, ou, les utilisateurs ordonnancés qui sont déterminés dans deux temps consécutifs d'ordonnancement itératif sont les mêmes.
